# EUROPÄISCHE PATENTSCHRIFT

(11) **EP 3 755 583 B1**
(45) Veröffentlichungstag und Bekanntmachung des Hinweises auf die Patenterteilung: **10.11.2021**
(21) Anmeldenummer: 19707339.8
(22) Anmeldetag: 21.02.2019
(51) Int. Cl.: B60R 22/18, B60N 2/68, B60R 22/26, B60R 22/28

(54) **SICHERHEITSGURTEINRICHTUNG FÜR EINEN FAHRZEUGSITZ**
SEAT BELT DEVICE FOR A VEHICLE SEAT
DISPOSITIF DE CEINTURE DE SÉCURITÉ POUR SIÈGE DE VÉHICULE

(30) Priorität: 22.02.2018 DE 102018202697
(43) Veröffentlichungstag der Anmeldung: 30.12.2020
(73) Patentinhaber: VOLKSWAGEN AKTIENGESELLSCHAFT, 38440 Wolfsburg (DE)
(72) Erfinder: MÖKER, Carsten, 38471 Rühen (DE)
(86) Internationale Anmeldenummer: PCT/EP2019/054328
(87) Internationale Veröffentlichungsnummer: WO 2019/162387

(56) Entgegenhaltungen:
- DE-A1- 3 316 608
- DE-A1- 3 319 547
- GB-A- 1 571 505
- GB-A- 2 201 329
- US-A1- 2017 225 649

## Beschreibung

Die Erfindung betrifft eine Vorrichtung mit einer Sicherheitsgurteinrichtung für einen Fahrzeugsitz nach dem Oberbegriff des Anspruches 1.

Ein solcher Fahrzeugsitz kann Bestandteil einer Fondsitzbank eines Fahrzeugs sein, die einen mittleren Fondsitz sowie in Fahrzeugquerrichtung beidseitig unmittelbar daran angrenzende seitliche Fondsitze aufweist. Jeder dieser Fondsitze kann aus einem Sitzteil sowie einer Rückenlehne ausgebildet sein und in der Fahrzeuglängsrichtung zum Beispiel über ein Schienensystem längsverstellbar am Fahrzeugboden gelagert sein. Zudem ist jedes dieser Fondsitze mit einem Sicherheitsgurt ausgerüstet, der mit einem seitlich unterhalb einer Sitzfläche am Fondsitz montierten Gurtschloss in lösbare Verbindung bringbar ist. Aufgrund der in der Fahrzeugquerrichtung äußerst geringen Bewegungsspalt zwischen den Fondsitzen besteht die Gefahr, dass ein in seiner Nichtgebrauchslage befindliches Gurtschloss als Störkontur wirkt, sofern ein unmittelbar daran angrenzender Fondsitz längsverstellt wird.

Aus der DE 100 09 422 C2 ist eine federelastische Stahlseilversteifung zwischen Seilumlenkung und Schloss bekannt. Damit wird eine Gurtschlossträgereinheit bereitgestellt, die auf einfache Weise das Entstehen von Klappergeräuschen vermeidet. Aus der DE 297 02 077 U1 ist ein Gurtschloss mit daran befestigtem Zugseil bekannt, an dem ein Endstück zur fahrzeugfesten Montag des Zugseils angebracht ist.

Aus der DE 33 19 547 A1 ist ein gattungsgemäßer Beschlag für Sicherheitsgurte in Kraftfahrzeugen bekannt. Die GB 1 571 505 A offenbart Verbesserungen an oder in Bezug auf Kabelbefestigungen. Aus der US 2017/225649 A1 sind lastbegrenzende Sicherheitsgurtschlossbaugruppen bekannt. Die GB 2 201 329 A offenbart Verbesserungen in oder in Bezug auf eine Sicherheitsgurtschlossanordnung.

Die Aufgabe der Erfindung besteht darin, eine Vorrichtung mit einer Sicherheitsgurteinrichtung bereitzustellen, bei der das Gurtschloss in unterschiedlichen Belastungsfällen betriebssicher positionierbar ist.

Die Aufgabe ist durch die Merkmale des Anspruches 1 gelöst. Bevorzugte Weiterbildungen der Erfindung sind in den Unteransprüchen offenbart.

Die erfindungsgemäße Vorrichtung mit einer Sicherheitsgurteinrichtung ist mit einem hülsenförmigen Umlenkelement ausgeführt, durch das ein Drahtseil geführt ist, das einerseits an einem sitzseitigen Anbindungspunkt am Fahrzeugsitz befestigt ist und andererseits an einem gurtschlossseitigen Anbindungspunkt am Gurtschloss befestigt ist. Das hülsenförmige Umlenkelement legt den Verlauf des Drahtseils zwischen einem sitzseitigen Anbindungspunkt und seinem gurtschlossseitigen Anbindungspunkt fest. Mit Hilfe des Umlenkelementes wird dem Gurtschloss in seiner Nichtgebrauchslage eine Ablageposition aufgeprägt, in der das Gurtschloss flach auf einer Sitzfläche des Fahrzeugsitzes aufliegt. Von daher ist gewährleistet, dass das abgelegte Gurtschloss nicht als Störkontur wirkt, wenn ein unmittelbar daran angrenzender Fahrzeugsitz längsverstellt wird. Durch die definierte Ablageposition des Gurtschlosses können daher Sitzanteile einer Fondsitzbank in Längsrichtung ohne weiteres gegeneinander verstellt werden, ohne dass sich die auf der Sitzfläche befindlichen Gurtschlösser verhaken oder einklemmen können. Eine solche Interaktion könnte das Gurtschlossgehäuse beschädigen und die Gurtschloss-Verriegelungsfunktion beeinträchtigen.

Das oben erwähnte hülsenförmige Umlenkelement ist formstabil auszuführen, um das Gurtschloss betriebssicher in seiner Ablageposition zu halten. Eine solche Formstabilität ist insofern von Nachteil, als sich das hülsenförmige Umlenkelement - bei angelegtem Sicherheitsgurt - schwer in Gurtkraftrichtung auslenken/ausrichten lässt. Dadurch verursacht das hülsenförmige Umlenkelement (Aluminium-Kausche) eine Vorspannung auf das Gurtschloss in seiner Gebrauchsposition. Die Kausche ist ein über den Stahlseilen nachträglich verpresstes Aluminiumrohr, welches dem Stahlseil bzw. dem Schlosskopf die gewünschte Richtung/Lage für die Gurtschlossablageposition vorgibt. Der Schlosskopf steht daher montiert unter Vorspannung.

Mittels des obigen hülsenförmigen Umlenkelementes ergibt sich eine nahezu rechtwinklige Drahtseil-Umlenkung im angelegten Zustand, und zwar im Drahtseil-Verlauf zwischen dem hülsenförmigen Umlenkelement und dem Gurtschloss, wodurch das Gurtschloss in seiner Gebrauchsposition mit den bereits erwähnten Kipp- und/oder Drallmomenten aufgrund von einwirkenden Gurtkräften beaufschlagt ist. Entsprechend hat das Gurtschloss in seiner Gebrauchsposition permanent den Drang, sich in Richtung Ablageposition zu bewegen. Um sich anzugurten, muss das Gurtschloss unter Aufbau einer Rückstellkraft aus einer Ablageposition in seine Gebrauchsposition manuell gezogen werden. Dabei wird das Gurtschloss weiter vorgespannt. Dies hat zur Folge, dass sich der Gurtschlosskopf verdreht und ein Drehimpuls (Drall) erzeugt wird.

Im Falle eines Frontalaufpralls verlagert sich der Insasse/dessen Becken nach vorne. Die Vorspannung/der Drehimpuls steigt dadurch auf das Gurtschloss weiter stetig an. Durch diese ständig wachsende Vorspannung und Drehbewegung wird die Verriegelungsklinke (Rastnocken) im Gurtschloss zeitweise einseitig belastet und versagt/bricht. Dies hat zur Folge, dass die Steckzunge aus dem Gurtschloss rutscht und es keine Rückhaltewirkung mehr gibt.

Vor diesem Hintergrund weist das Umlenkelement gemäß dem Anspruch 1 eine Solldeformationsstelle auf, an der das Umlenkelement in einem Frontalkollisionsfall deformiert/aufbricht und zwar unter Verlagerung des Gurtschlosses von seiner Gebrauchsposition in eine Crashposition, in der die auf das Gurtschloss einwirkenden Kipp- oder Drallmomente reduziert sind. Erfindungsgemäß wird somit das an sich sehr formstabile Umlenkelement durch Materialschwächung mit einer Sollbiegestelle oder Sollbruchstelle ausgelegt. Ziel der Solldeformationsstelle ist es, das hülsenförmige Umlenkelement bei einer vordefinierten Zugkraft (die im Crashfall auftritt) leichter aufzubiegen, um die Vorspannung/den Drehimpuls auf das Gurtschloss unter Last zu reduzieren. Auf diese Weise wird erreicht, dass die Verriegelungsklinke im Gurtschloss über die Lastdauer (im Crashfall) gleichmäßiger beansprucht/belastet wird.

In einer technischen Umsetzung kann das hülsenförmige Umlenkelement winkelförmig mit einem vertikalen Führungsschenkel und einem horizontalen Führungsschenkel ausgebildet sein. Das Drahtseil kann ausgehend von seinem unteren sitzseitigen Anbindungspunkt zunächst in einer Hochführung durch den vertikalen Führungsschenkel und weiter durch den horizontalen Führungsschenkel mit einem Drahtseilende aus dem Umlenkelement herausgeführt werden und am Gurtschloss angebunden werden.

Bevorzugt ist es, wenn die Solldeformationsstelle speziell in einem Inneneckbereich des Umlenkelementes ausgebildet ist, der zwischen dem vertikalen Führungsschenkel und dem horizontalen Führungsschenkel aufgespannt ist. Im Frontalkollisionsfall wird das Drahtseil unter Einwirkung von Gurtkraft gestreckt, wodurch das Umlenkelement an seiner Solldeformationsstelle deformiert.

Bevorzugt ist es, wenn der Fahrzeugsitz Bestandteil einer Fondsitzbank eines Fahrzeuges ist. Diese Fondsitzbank kann einen mittleren Fondsitz sowie in Fahrzeugquerrichtung zumindest einen weiteren daran angrenzenden seitlichen Fondsitz aufweisen. Die Fondsitze können in Fahrzeuglängsrichtung gegeneinander längsverstellt werden.

In einer bevorzugten technischen Realisierung kann das hülsenförmige Umlenkelement eine Metall-Kausche sein, die mit einem Presswerkzeug auf das Drahtseil aufgepresst ist. Bevorzugt kann die Kausche aus einem Aluminiummaterial gebildet sein. Die Solldeformationsstelle kann bevorzugt durch Bohrungen, Perforationen und/oder Einprägungen ausgebildet werden. Alternativ dazu kann die Solldeformationsstelle einen Materialeinschnitt aufweisen, der im Inneneckbereich zwischen dem vertikalen Führungsschenkel und dem horizontalen Führungsschenkel ausgebildet ist.

In Versuchen wurde festgestellt, dass die Form der als Eindrückung/Einkerbung/Einprägung ausgebildeten Solldeformationsstelle einen großen Einfluss auf das Aufreißverhalten des Umlenkelements (d.h. zum Beispiel einer Alu-Hülse) hat. Vor diesem Hintergrund kann die Solldeformationsstelle in unterschiedlichen Ausführungsvarianten realisiert werden.

So kann die Solldeformationsstelle in einer Ausführungsvariante eine Einkerbung/Einprägung sein, die sich in Längsrichtung des hülsenförmigen Umlenkelements erstreckt. Zudem ist hervorzuheben, dass die Geometrie der Einkerbung/Einprägung unterschiedlich ausgeführt sein kann. Diese kann beispielhaft abgerundet, keilförmig, gelocht, trapezförmig ausgeführt werden.

Die Solldeformationsstelle kann beispielhaft komplett umlaufend oder nur teilumlaufend in dem hülsenförmigen Umlenkelement eingebracht sein.

Nachfolgend ist ein Ausführungsbeispiel der Erfindung anhand der beigefügten Figuren beschrieben.

Es zeigen:
- Figur 1: in einer perspektivischen Teilansicht einen Fahrzeugsitz, dessen Gurtschloss sich in einer Ablageposition befindet;
- Figuren 2 und 3: jeweils Ansichten entsprechend der Figur 1, in denen sich das Gurtschloss in einer Gebrauchsposition und in einer Crashposition befindet; und
- Figuren 4 bis 7: jeweils unterschiedliche Ausführungsbeispiele des hülsenförmigen Umlenkelementes.

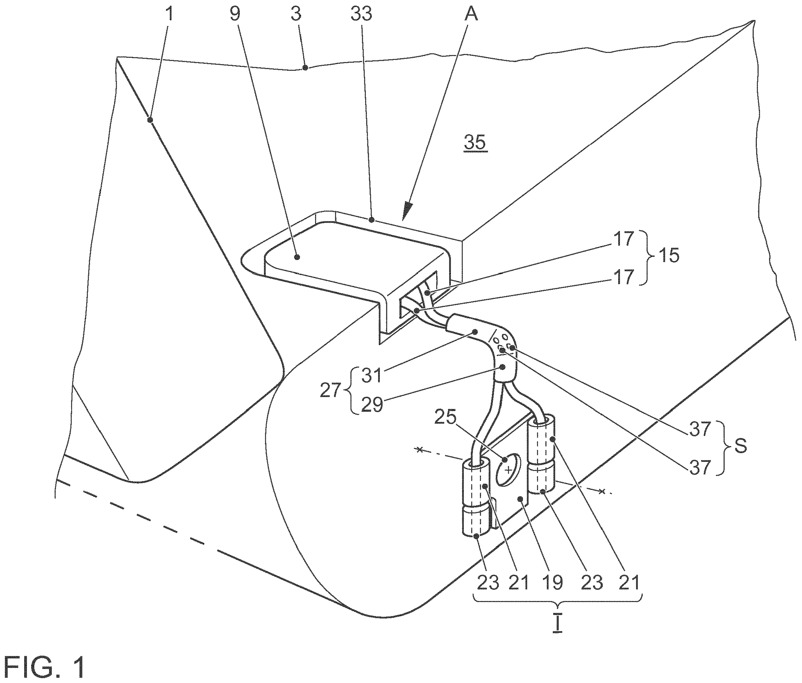

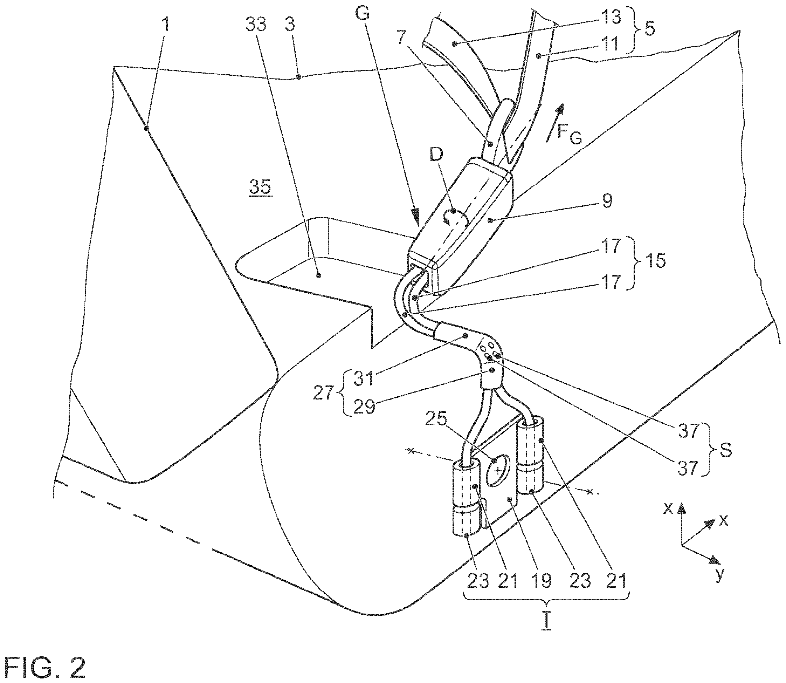

In der Figur 1 ist in teilweiser perspektivischer Darstellung ein Fahrzeugsitz mit einer Rückenlehne 1 und einem Sitzteil 3 gezeigt. Dem Fahrzeugsitz ist eine Sicherheitsgurteinrichtung zugeordnet, die einen Dreipunkt-Sicherheitsgurt 5 (Figur 2) aufweist, dessen Gurtzunge 7 lösbar mit einem Gurtschloss 9 in Eingriff ist (Figur 2). Der Dreipunkt-Sicherheitsgurt 5 setzt sich aus einem Schultergurtanteil 11 und einem Beckengurtanteil 13 zusammen, die an der Gurtzunge 7 einstückig ineinander übergehen.

In der Figur 1 ist das Gurtschloss 9 über ein Drahtseil 15 bodenseitig an einer nicht gezeigten Tragstruktur des Fahrzeugsitzes befestigt. Das Drahtseil 15 ist innerhalb des Gurtschlosses 9 schlaufenförmig um eine nichtgezeigte Öse geführt, wobei sich zwei Schlaufenteile 17 des Drahtseils 15 über eine vorgegebene Seillänge bis zu einem sitzseitigen Anbindungspunkt I erstrecken. In der Figur 1 ist der sitzseitige Drahtseil-Anbindungspunkt I als ein Blechhalter 19 ausgeführt, der zwei seitliche Aufnahmekanäle 21 aufweist, durch die die beiden unteren Seilenden geführt sind. Jedes der beiden Seilenden weist eine Kausche 23 auf, die durchmessergrößer gestaltet ist als die beiden Aufnahmekanäle 21 des Blechhalters 19. Der Blechhalter 19 weist zudem in etwa mittig ein Schraubloch 25 auf, über das der Blechhalter 19 an der Tragstruktur des Fahrzeugsitzes befestigbar ist.

Wie aus der Figur 1 weiter hervorgeht, sind die beiden Drahtseil-Schlaufen 17 durch ein hülsenförmiges Umlenkelement 27 geführt, das den Verlauf des Drahtseils 15 zwischen seinem sitzseitigen Anbindungspunkt I und seinem gurtschlossseitigen Anbindungspunkt festlegt. Im gezeigten Ausführungsbeispiel ist das hülsenförmige Umlenkelement 27 eine Aluminium-Kausche, die mit einem Presswerkzeug auf das Drahtseil 15 aufgepresst wird. Das hülsenförmige Umlenkelement 27 ist in den Figuren winkelförmig mit einem vertikalen Führungsschenkel 29 und einem horizontalen Führungsschenkel 31 ausgebildet, so dass sich die beiden Drahtseil-Schlaufen 17 ausgehend von ihrem sitzseitigen Anbindungspunkt I zunächst durch den vertikalen Führungsschenkel 29 und weiter durch den horizontalen Führungsschenkel 31 bis zum Gurtschloss 9 erstrecken. Auf diese Weise prägt das hülsenförmige Umlenkelement 27 dem Gurtschloss 9 in seiner Nichtgebrauchslage (Figur 1) eine Ablageposition A auf, in der das Gurtschloss 9 flach in einer Aufnahmemulde 33 der Sitzfläche 35 des Fahrzeugsitzes aufliegt. Dadurch ist betriebssicher verhindert, dass das in seiner Nichtgebrauchslage befindliche Gurtschloss 9 als Störkontur bei einer Längsverstellung eines nicht gezeigten, unmittelbar daran angrenzenden Fahrzeugsitzes wirkt.

In der Figur 2 ist das Gurtschloss 9 in seiner Gebrauchsposition G gezeigt, in der die Gurtzunge 7 in das Gurtschloss 9 eingesteckt ist. Eine solche Gebrauchsposition G ergibt sich in einem normalen Fahrbetrieb des Fahrzeugs. Dabei ist das Gurtschloss 9 in einer Neigungslage in der Fahrzeugquerrichtung y seitlich nach außen geneigt ist. Die in der Figur 2 gezeigte Gebrauchsposition G wird durch das hülsenförmige, formstabile Umlenkelement 27 aufgeprägt und führt bei Einwirkung von Gurtkräften F_{G} dazu, dass das Gurtschloss 9 mit Kipp-/Drallmomenten D beaufschlagt wird. Im Stand der Technik sind solche Kipp-/Drallmomente D bei der Auslegung des Gurtschlosses 9 zu berücksichtigen, um auch bei einer Frontalkollision eine sichere Verbindung zwischen der Gurtzunge 7 und dem Gurtschloss 9 zu gewährleisten.

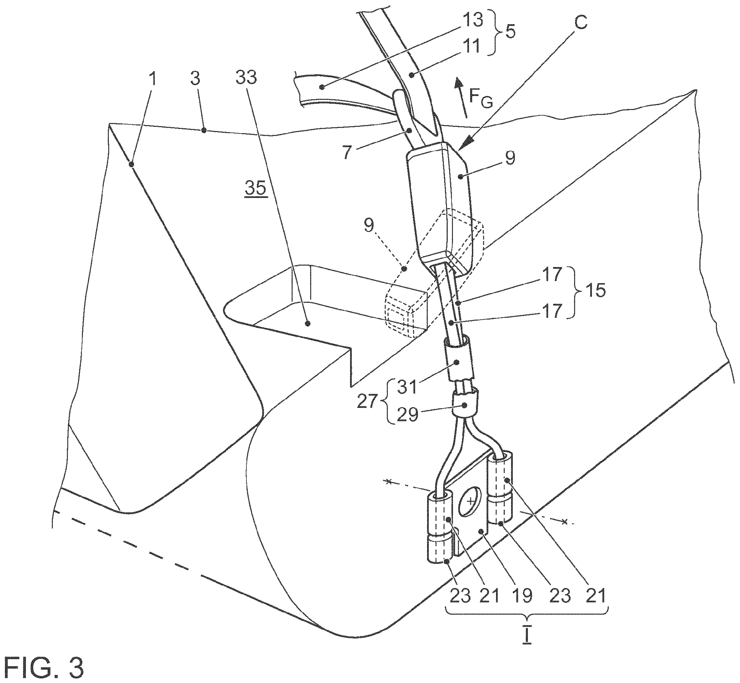

Erfindungsgemäß weist das in den Figuren gezeigte hülsenförmige Umlenkelement 27 am Übergang zwischen seinem vertikalen Führungsschenkel 29 und seinem horizontalen Führungsschenkel 31 eine Sollbruchstelle S auf. Im Frontalkollisionsfall wird das durch das hülsenförmige Umlenkelement 27 geführte Drahtseil 15 unter Einwirkung der crashbedingt stark erhöhten Gurtkraft F_{G} gestreckt, wie es in der Figur 3 angedeutet ist, wodurch das hülsenförmige Umlenkelement 27 an seiner Sollbruchstelle S aufbricht. Auf diese Weise wird das Gurtschloss 9 von seiner Gebrauchsposition (Figur 2 sowie in der Figur 3 gestrichelt angedeutet) in eine zusätzliche Crashposition C verlagert, in der die auf das Gurtschloss 9 einwirkenden Kipp- oder Drallmomente D reduziert sind.

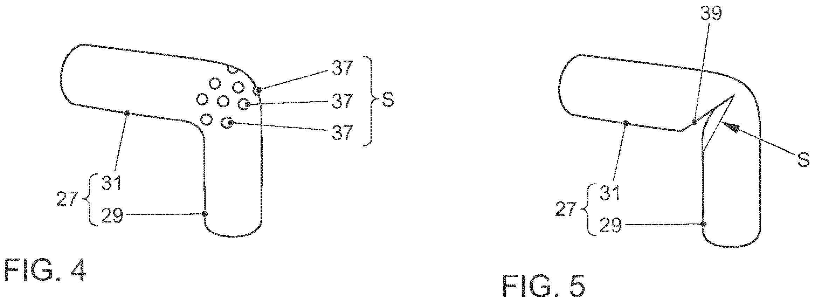

In der Figur 4 ist das hülsenförmige Umlenkelement 27 in Alleinstellung gezeigt. Demzufolge weist die Sollbruchstelle S in Umfangsrichtung umfangsverteilte Bohrungen oder Perforationen 37 auf. Alternativ und/oder zusätzlich können an der Sollbruchstelle S auch beliebige Einprägungen ausgebildet sein.

In der Figur 5 ist das hülsenförmige Umlenkelement 27 in einer weiteren Ausführungsvariante gezeigt, bei der anstelle von Bohrungen ein in etwa keilförmiger Materialeinschnitt 39 am Inneneckbereich zwischen dem vertikalen Führungsschenkel 29 und dem horizontalen Führungsschenkel 31 ausgebildet ist.

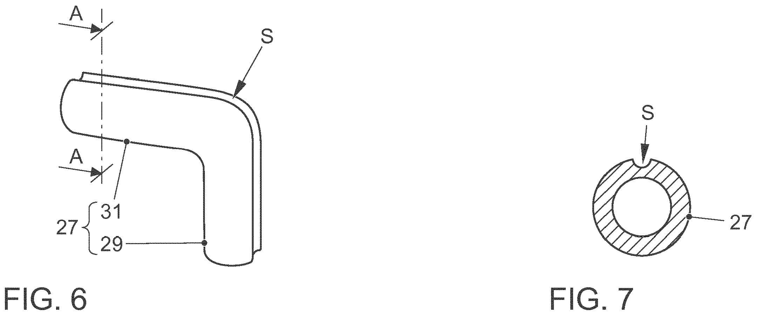

In den Figuren 6 und 7 ist das hülsenförmige Umlenkelement 27 mit einer Solldeformationsstelle S gezeigt, die als eine Einkerbung/Einprägung am Außenumfang des Umlenkelements 27 ausgebildet ist. Die Einkerbung/Einprägung erstreckt sich in Längsrichtung komplett durchgängig sowohl im vertikalen Führungsschenkel 29, im horizontalen Führungsschenkel 31 als auch im Außeneckbereich zwischen den beiden Schenkeln 29, 31. In der Figur 7 ist beispielhaft eine Nutgeometrie der Einkerbung/Einprägung gezeigt. Demzufolge ist die Nutgeometrie gerundet dargestellt. Die Erfindung ist jedoch nicht auf die in der Figur 7 gezeigte Nutgeometrie beschränkt. Anstelle dessen kann die Einkerbung/Einprägung auch eine abgerundete, keilförmige, gelochte oder trapezförmige Querschnittsgeometrie aufweisen.

### Bezugszeichenliste

- 1: Rückenlehne
- 3: Sitzteil
- 5: Sicherheitsgurt
- 7: Gurtzunge
- 9: Gurtschloss
- 11: Schultergurtanteil
- 13: Beckengurtanteil
- 15: Drahtseil
- 17: Drahtseilschlaufen
- 19: Blechhalter
- 21: Aufnahmekanäle
- 23: Kauschen
- 25: Schraubloch
- 27: hülsenförmiges Umlenkelement
- 29: vertikaler Führungsschenkel
- 31: horizontaler Führungsschenkel
- 33: Aufnahmemulde
- 35: Sitzfläche
- 37: Bohrungen, Perforationen
- 39: Materialeinschnitt
- A: Ablageposition
- G: Gebrauchsposition
- C: Crashposition
- I: sitzseitiger Anbindungspunkt des Drahtseils 15

## Patentansprüche

1. Vorrichtung mit einer Sicherheitsgurteinrichtung für einen Fahrzeugsitz, mit einem Sicherheitsgurt (5), dessen Gurtzunge (7) in einem angelegten Zustand mit einem sitzseitigen Gurtschloss (9) in lösbarer Verbindung ist, wobei das Gurtschloss (9) über zumindest ein Drahtseil (15) durch ein hülsenförmiges Umlenkelement (27) geführt ist, das den Verlauf des Drahtseils (15) zwischen seinem sitzseitigen Anbindungspunkt (I) und seinem gurtschlossseitigen Anbindungspunkt festlegt, wobei das hülsenförmige Umlenkelement (27) dem Gurtschloss (9) im angelegten Zustand eine Gebrauchsposition (G) aufprägt, in der das Gurtschloss (9) aufgrund einwirkender Gurtkräften (F_{G}) mit Kipp- und/oder Drallmomenten (D) beaufschlagt ist, **dadurch gekennzeichnet, dass** das hülsenförmige Umlenkelement (27) dem Gurtschloss (9) in seiner Nichtgebrauchslage eine Ablageposition (A) aufprägt, in der das Gurtschloss (9) flach auf einer Sitzfläche (35) des Fahrzeugsitzes aufliegt, und dass das hülsenförmige Umlenkelement (27) eine Solldeformationsstelle (S) aufweist, an der das Umlenkelement (27) in einem Frontalkollisionsfall deformiert, und zwar unter Verlagerung des Gurtschlosses (9) von seiner Gebrauchsposition (G) in eine Crashposition (C), in der die auf das Gurtschloss (9) einwirkenden Kipp- oder Drallmomente (D) reduziert sind.

2. Vorrichtung nach Anspruch 1, **dadurch gekennzeichnet, dass** das hülsenförmige Umlenkelement (27) winkelförmig mit einem vertikalen Führungsschenkel (29) und einem horizontalen Führungsschenkel (31) ausgebildet ist, und dass das Drahtseil (15) ausgehend von seinem sitzseitigen Anbindungspunkt (I) zunächst in einer Hochführung durch den vertikalen Führungsschenkel (29) und weiter durch den horizontalen Führungsschenkel (31) mit einem Drahtseilende aus dem Umlenkelement (27) herausgeführt und am Gurtschloss (9) angebunden ist.

3. Vorrichtung nach Anspruch 2, **dadurch gekennzeichnet, dass** das Umlenkelement (27) zwischen seinem vertikalen Führungsschenkel (29) und seinem horizontalen Führungsschenkel (31) die Solldeformationsstelle (S) aufweist.

4. Vorrichtung nach Anspruch 1, 2 oder 3, **dadurch gekennzeichnet, dass** im Frontalkollisionsfall das Drahtseil (15) unter Einwirkung von Gurtkraft (F_{G}) gestreckt wird, wodurch das Umlenkelement (27) an seiner Solldeformationsstelle (S) auseinanderbricht.

5. Vorrichtung nach einem der vorhergehenden Ansprüche, **dadurch gekennzeichnet, dass** der Fahrzeugsitz Bestandteil einer Fondsitzbank eines Fahrzeugs ist, die ein mittleres Fondsitzteil sowie in Fahrzeugquerrichtung (y) zumindest ein daran angrenzendes seitliches Fondsitzteil aufweist, und dass die Fondsitzteile in Fahrzeuglängsrichtung (x) zueinander verstellbar sind, und dass der Fahrzeugsitz der mittlere Fondsitzteil ist.

6. Vorrichtung nach einem der vorhergehenden Ansprüche, **dadurch gekennzeichnet, dass** das hülsenförmige Umlenkelement (27) eine Kausche aus Metall ist, die mit einem Presswerkzeug auf das Drahtseil (15) aufgepresst ist.

7. Vorrichtung nach einem der vorhergehenden Ansprüche, **dadurch gekennzeichnet, dass** die Solldeformationsstelle (S) Bohrungen (37), Perforationen und/oder Einprägungen aufweist.

8. Vorrichtung nach einem der Ansprüche 2 bis 6, **dadurch gekennzeichnet, dass** die Solldeformationsstelle (S) einen Materialeinschnitt (39) am Inneneckbereich zwischen dem vertikalen und dem horizontalen Führungsschenkel (29, 31) aufweist.

## Claims

1. Device having a seat belt device for a vehicle seat, having a seat belt (5), the belt tongue (7) of which in an applied state is releasably connected to a belt buckle (9) on the seat, wherein the belt buckle (9) is guided via at least one wire cable (15) through a sleeve-shaped deflection element (27) which defines the course of the wire cable (15) between its connecting point (I) on the seat and its connecting point on the belt buckle, wherein the sleeve-shaped deflection element (27) impresses onto the belt buckle (9) in the applied state a use position (G) in which the belt buckle (9) is subjected to tilting and/or twisting moments (D) due to the acting belt forces (F_{G}), **characterized in that** the sleeve-shaped deflection element (27) impresses onto the belt buckle (9) in its unused position a placement position (A) in which the belt buckle (9) lies flat on a seat surface (35) of the vehicle seat, **and that** the sleeve-shaped deflection element (27) has a target deformation point (S) at which the deflection element (27) deforms in a head-on collision, viz., when the belt buckle (9) is displaced from its use position (G) into a crash position (C) in which the tilting or twisting moments (D) acting upon the belt buckle (9) are reduced.

2. Device according to claim 1, **characterized in that** the sleeve-shaped deflection element (27) is designed in an angular shape with a vertical guide leg (29) and a horizontal guide leg (31), **and that** the wire cable (15), starting from its connecting point (I) on the seat, is first, in an elevated guide, guided through the vertical guide leg (29) and further through the horizontal guide leg (31) with a wire cable end out of the deflection element (27), and is connected to the belt buckle (9).

3. Device according to claim 2, **characterized in that**, between its vertical guide leg (29) and its horizontal guide leg (31), the deflection element (27) features the target deformation point (S).

4. Device according to claim 1, 2, or 3, **characterized in that**, in a head-on collision, the wire cable (15) is stretched under the effect of belt force (F_{G}), as a result of which the deflection element (27) breaks apart at its target deformation point (S).

5. Device according to one of the preceding claims, **characterized in that** the vehicle seat is a component of a back seat bench of a vehicle, which has a central back seat part and, in the transverse direction of the vehicle (y), at least one lateral back seat part adjoined thereto, **and that** the back seat parts are adjustable relative to one another in the longitudinal direction (x) of the vehicle, **and that** the vehicle seat is the central back seat part.

6. Device according to one of the preceding claims, **characterized in that** the sleeve-shaped deflection element (27) is a metal thimble which is pressed onto the wire cable (15) using a pressing tool.

7. Device according to one of the preceding claims, **characterized in that** the target deformation point (S) has holes (37), perforations, and/or impressions.

8. Device according to one of claims 2 through 6, **characterized in that** the target deformation point (S) has a material incision (39) at the inner corner region between the vertical and the horizontal guide legs (29, 31).

## Revendications

1. Appareil comprenant un dispositif de ceinture de sécurité pour un siège de véhicule, comportant une ceinture de sécurité (5), dont la languette de ceinture (7), à l'état appliqué, est reliée de manière amovible à une boucle de ceinture (9) côté siège, dans lequel la boucle de ceinture (9) est guidée par au moins un câble métallique (15) à travers un élément de renvoi (27) en forme de manchon, qui définit la trajectoire du câble métallique (15) entre son point de fixation (I) côté siège et son point de fixation côté boucle de sécurité, dans lequel l'élément de renvoi (27) en forme de manchon impose une position d'utilisation (G) sur la boucle de ceinture (9) à l'état appliqué, position dans laquelle la boucle de ceinture (9) est sollicitée par des moments de basculement et/ou de torsion (D) dus aux forces de ceinture (F_{G}) agissant, **caractérisé en ce que** l'élément de renvoi (27) en forme de manchon impose une position de dépôt (A) sur la boucle de ceinture (9) dans sa position de non-utilisation, position dans laquelle la boucle de ceinture (9) repose à plat sur une surface de siège (35) du siège de véhicule, **et en ce que** l'élément de renvoi (27) en forme de manchon présente un point de déformation (S) souhaité au niveau duquel l'élément de renvoi (27) se déforme en cas de collision frontale, notamment par déplacement de la boucle de ceinture (9) de sa position d'utilisation (G) vers une position de collision (C), dans laquelle les moments de basculement ou de torsion (D) agissant sur la boucle de ceinture (9) sont réduits.

2. Appareil selon la revendication 1, **caractérisé en ce que** l'élément de renvoi (27) en forme de manchon est conçu angulaire avec une branche de guidage verticale (29) et une branche de guidage horizontale (31) **et en ce que** le câble métallique (15), à partir de son point de fixation (I) côté siège, est guidé vers l'extérieur d'abord dans un guidage haut à travers la branche de guidage verticale (29) puis à travers la branche de guidage horizontale (31) avec une extrémité de câble métallique à partir de l'élément de renvoi (27) et est relié à la boucle de ceinture (9).

3. Appareil selon la revendication 2, **caractérisé en ce que** l'élément de renvoi (27) présente, entre sa branche de guidage verticale (29) et sa branche de guidage horizontale (31), le point de déformation (S) souhaité.

4. Appareil selon la revendication 1, 2 ou 3, **caractérisé en ce que**, en cas de collision frontale, le câble métallique (15) est tendu sous l'action de la force de ceinture (F_{G}), moyennant quoi l'élément de renvoi (27) se rompt au niveau de son point de déformation (S) souhaité.

5. Appareil selon l'une quelconque des revendications précédentes, **caractérisé en ce que** le siège de véhicule forme un composant d'une banquette arrière d'un véhicule, qui présente une partie de siège médiane ainsi qu'au moins une partie de siège latérale adjacente dans la direction transversale du véhicule (y) **et en ce que** les parties de siège sont réglables l'une par rapport à l'autre dans la direction longitudinale du véhicule (x) **et en ce que** le siège de véhicule est la partie de siège médiane.

6. Appareil selon l'une quelconque des revendications précédentes, **caractérisé en ce que** l'élément de renvoi (27) en forme de manchon est une cosse en métal, qui est pressée sur le câble métallique (15) avec un outil de presse.

7. Appareil selon l'une quelconque des revendications précédentes, **caractérisé en ce que** le point de déformation (S) souhaité présente des alésages (37), des perforations et/ou des empreintes.

8. Appareil selon l'une quelconque des revendications 2 à 6, **caractérisé en ce que** le point de déformation (S) souhaité présente une entaille de matériau (39) sur la zone d'angle intérieur entre les branches de guidage verticale et horizontale (29, 31).
